# EUROPEAN PATENT APPLICATION

(11) **EP 4 718 605 A2**
(43) Date of publication of application: **01.04.2026**
(21) Application number: 25195387.3
(22) Date of filing: 12.08.2025
(51) Int. Cl.: H01M 50/24, H01M 50/262, H01M 50/204, H01M 50/271

(54) **ENERGY STORAGE SYSTEM**

(30) Priority: 30.09.2024 KR 20240133077
(71) Applicant: SAMSUNG SDI CO., LTD., Yongin-si, Gyeonggi-do 17084 (KR)
(72) Inventor: LEE, Jigu, 17084 Yongin-si (KR)
(74) Representative: Marks & Clerk LLP

(57) **Abstract**

An energy storage system includes a housing including an internal space accommodating one or more battery modules, and at least one open side, a first door and a second door arranged adjacent to each other at the at least one open side of the housing, a connection unit having a first end connected to the first door and a second end connected to the second door, and a sealing unit fastened to the connection unit and arranged between the first door and the second door.

## Description

### BACKGROUND

### 1. Field

Aspects of embodiments of the present disclosure relate to an energy storage system.

### 2. Description of the Related Art

Energy storage systems (ESSs) are systems that store large amounts of electric energy and then supply the stored electric energy when electric energy is needed, to increase energy efficiency.

In general, ESSs may include battery systems, battery management systems (BMSs) that manage the battery systems, such as monitoring voltages, currents, and temperatures of the battery systems, power conversion systems (PCSs) that perform alternating current (AC)-direct current (DC) conversion and distribution functions, energy management systems (EMSs) that control energy flows of the ESSs, and comprehensively control the entire systems of the ESSs such as collecting and managing information regarding states of the ESSs and the like, and the like. In addition, a battery system may include a plurality of battery racks electrically connected to each other. Each battery rack may include a plurality of battery modules electrically connected to each other, and each battery module may include a plurality of cells electrically connected to each other.

An energy storage system may include a plurality of battery modules, and, thus, the application of a structure capable of facilitating installation and management and improving space efficiency is needed. In addition, the plurality of battery modules installed within the energy storage system may be at risk of explosion and fire accidents, and, thus, a structure capable of releasing pressure in the event of a battery explosion needs to be secured.

The above-described information provided in the technology that is the background of the disclosure is provided for improving the understanding of the background of the disclosure, and thus may also include information that does not constitute the related art.

### SUMMARY

According to an aspect of embodiments of the present disclosure, an energy storage system having improved battery performance, space efficiency, and structural stability is provided.

However, aspects and problems to be solved by the present disclosure are not limited to the aspects and problems to be solved mentioned above, and other aspects, problems to be solved, and advantages of the disclosure that are not mentioned may be understood by the following description and may more clearly understood by the embodiments. In addition, it is to be appreciated that aspects, problems to be solved, and advantages of the present disclosure may be implemented by means defined by claims and a combination thereof.

According to one or more embodiments, an energy storage system includes a housing including an internal space accommodating one or more battery modules, and at least one open side, a first door and a second door arranged adjacent to each other at the at least one open side of the housing, a connection unit including a first end connected to the first door and a second end connected to the second door, and a sealing unit fastened to the connection unit and arranged between the first door and the second door.

The connection unit may include a rotation member fastened to the first door and including a rotation shaft, and a support member fastened to the second door and including a seating groove in which the rotation shaft is seated.

The sealing unit may include a sealing member arranged between surfaces of the first door and the second door facing each other.

A first end of the sealing member may be arranged between the surfaces of the first door and the second door facing each other, and a second end of the sealing member may be arranged to protrude from surfaces of the first door and the second door that are arranged parallel to each other.

The first end of the sealing member may include a first sealing portion extending toward the first door and the second door.

The first sealing portion may have a shape with a thickness decreasing toward the first door and the second door.

The second end of the sealing member may include a second sealing portion protruding to overlap the surfaces of the first door and the second door that are arranged parallel to each other.

The sealing member may include a first seating groove having a shape corresponding to the first door and a second seating groove having a shape corresponding to the second door.

The sealing unit may further include a central member arranged to be surrounded by the sealing member, and the energy storage system may further include a fixing unit arranged between the connection unit and the central member and having a shape corresponding to the central member.

According to one or more embodiments, an energy storage system includes a housing including an internal space accommodating one or more battery modules, and at least one open side, a first door and a second door arranged adjacent to each other on the one open side of the housing, and a sealing unit arranged between the first door and the second door, wherein the sealing unit includes a sealing member arranged to move along surfaces of the first door and the second door facing each other.

The energy storage system may further include a connection unit having a first end connected to the first door and a second end connected to the second door, wherein the sealing unit is fastened to the connection unit.

The connection unit may include a rotation member fastened to the first door and including a rotation shaft, and a support member fastened to the second door and including a seating groove or hole in which the rotation shaft is seated.

A first end of the sealing member may be arranged between the surfaces of the first door and the second door facing each other, and a second end of the sealing member may be arranged to protrude from surfaces of the first door and the second door that are arranged parallel to each other.

The first end of the sealing member may include a first sealing portion extending toward the first door and the second door.

The first sealing portion may have a shape with a thickness decreasing toward the first door and the second door.

The second end of the sealing member may include a second sealing portion protruding to overlap the surfaces of the first door and the second door that are arranged parallel to each other.

The sealing member may include a first seating groove having a shape corresponding to the first door and a second seating groove having a shape corresponding to the second door.

The sealing unit may further include a central member arranged to be surrounded by the sealing member, and the energy storage system may further include a guide unit arranged between the connection unit and the central member and having a shape corresponding to the central member.

The guide unit may include a first guide portion guiding a fastening location of the central member to a first location and a second guide portion guiding the fastening location to a second location.

When the central member is fastened to the guide unit, a fastening gap between the first guide portion and the central member may be greater than a fastening gap between the second guide portion and the central member.

At least some of the above and other features of the invention are set out in the claims.

Other aspects, features, and advantages other than those described above will become apparent from the drawings, claims, and following detailed description of the disclosure.

### BRIEF DESCRIPTION OF THE DRAWINGS

The following drawings attached to the description illustrate some embodiments and, together with the detailed description of the disclosure described below, are provided for further understanding of the disclosure; however, the disclosure should not be construed as being limited to the example drawings:
FIG. 1 is a side view schematically illustrating an example of an energy storage system according to an embodiment;
FIG. 2 is a partial perspective view schematically illustrating a region "A" of FIG. 1;
FIG. 3 is a partial perspective view schematically illustrating fastening of a sealing unit and a fixing unit of FIG. 2;
FIG. 4 is a side view schematically illustrating an example of an energy storage system according to an embodiment;
FIG. 5 is a partial perspective view schematically illustrating a region "B" of FIG. 4 when in a normal state;
FIG. 6 is a partial perspective view schematically illustrating the region "B" of FIG. 4 if an event occurs;
FIG. 7 is a plan view schematically illustrating movement of a sealing member;
FIG. 8 is a perspective view schematically illustrating an example of a guide unit;
FIG. 9 is a partial perspective view schematically illustrating fastening of a guide unit and a central member when in a normal state;
FIG. 10 is a cross-sectional view schematically illustrating the guide unit and the central member of FIG. 9;
FIG. 11 is a partial perspective view schematically illustrating fastening of a guide unit and a central member if an event occurs; and
FIG. 12 is a cross-sectional view schematically illustrating the guide unit and the central member of FIG. 11.

### DETAILED DESCRIPTION

While some embodiments are described herein, the present disclosure may be modified in various ways and have various embodiments, and, thus, the particular embodiments illustrated in the drawings and described in the detailed description are provided as examples. However, this is not intended to limit the disclosure to particular embodiments, but should be understood to include all modifications, equivalents, or alternatives included in the scope of the disclosure. When describing the disclosure, the detailed description of the related known arts, which may obscure the subject matter of the disclosure, may be omitted.

Although the terms "first," "second," etc. are used to describe various components, these components are not limited by these terms. These terms are used to distinguish one component from another, and unless otherwise specifically stated, a first component may also be a second component.

The terms used herein are used to describe particular embodiments and are not intended to limit the disclosure. The singular forms are intended to include the plural forms as well, unless the context clearly indicates otherwise. In the drawings, components may be exaggerated, omitted, or schematically illustrated for convenience and clarity of description, and the size of each component may not fully reflect the actual size.

When each component is described as being formed on or under another component, the terms "on" and "under" include both a case in which each component is formed directly on another component and a case in which one or more intervening components are present therebetween, and the criteria for the terms "on" and "under" are described on the basis of the drawings.

Any component being arranged "above (or under)" a component or "on (or underneath)" a component may mean that any component is arranged in contact with the upper surface (or lower surface) of the component, as well as that one or more other components may be interposed between the component and any component arranged on (or underneath) the component.

It is also be understood that, when a component is described as being "coupled to," "combined with," or "connected to" another component, the components may be directly coupled or connected to each other, or one or more other components may be "interposed" between the respective components, or the respective components may be "coupled to," "combined with" or "connected to" each other through another component. In addition, when a part is electrically coupled to another part, it includes not only a case in which the components are directly coupled to each other, but also a case in which the components are coupled to each other with one or more other elements therebetween.

When "A and/or B" are referred to throughout the description, it means A or B, or A and B unless otherwise stated to the contrary. In other words, the term "and/or" includes any and all combinations of a plurality of associated listed items. When "C to D" is referred to, it means that it means C or more and D or less unless otherwise stated in opposition.

Herein, some embodiments are described in further detail with reference to the attached drawings and, when describing the embodiments with reference to the attached drawings, the same or corresponding components are assigned the same reference numerals and the same descriptions thereof may be omitted.

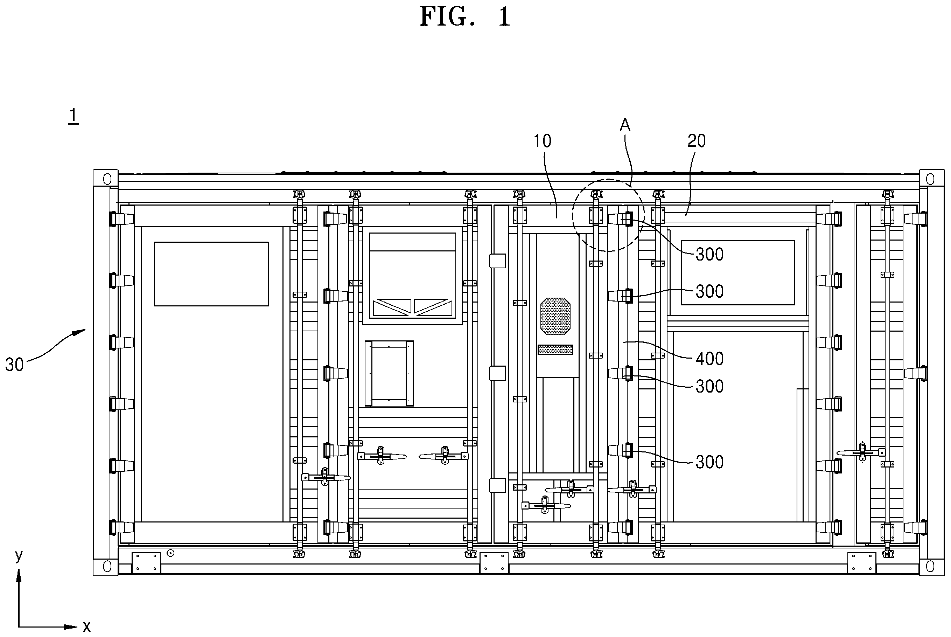

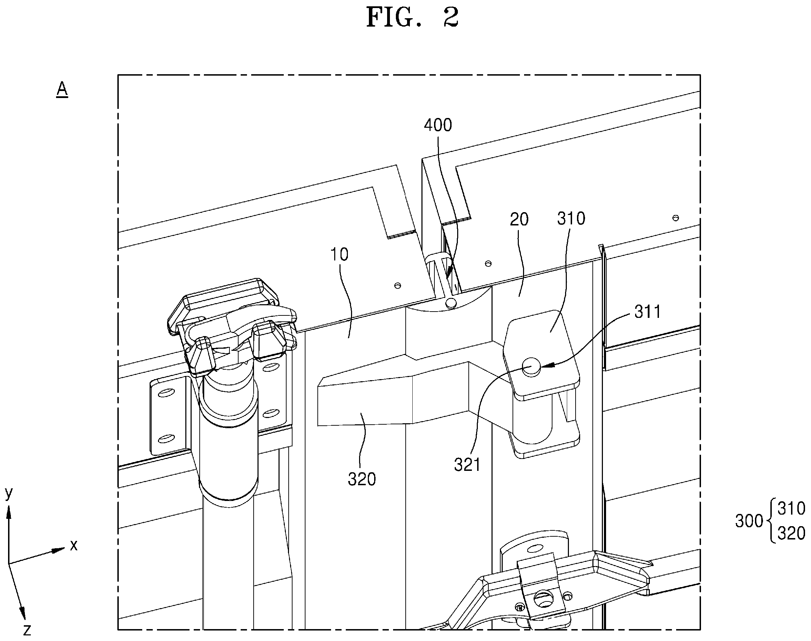

FIG. 1 is a side view schematically illustrating an example of an energy storage system 1 according to an embodiment; and FIG. 2 is a perspective view schematically illustrating a region "A" of FIG. 1. For convenience of illustration, a housing 30 is omitted in FIG. 2.

Referring to FIG. 1, the energy storage system (ESS) 1 according to an embodiment may include the housing 30, a first door 10, a second door 20, a connection unit 300, and a sealing unit 400.

The housing 30 may form an accommodation space accommodating one or more battery modules and may have a shape with at least one side open. For example, the housing 30 may have a generally hexahedral shape with one side open, but is not limited thereto.

In an embodiment, the accommodation space within the housing 30 may accommodate a plurality of battery modules (not shown) mounted on a plurality of battery racks (not shown) and a plurality of battery cells (not shown) accommodated in a case (not shown) of each of the battery modules. Each of the battery cells may include a secondary battery that may be charged and discharged.

The first door 10 and the second door 20 may be arranged adjacent to each other toward the open side of the housing 30. The first door 10 and the second door 20 may provide a structure that may be opened and closed while providing a sidewall structure that blocks the open side of the housing 30 to open the accommodation space of the housing 30 for the battery modules or separate the accommodation space from an external space and thus easily manage the accommodation space.

The connection unit 300 may have a first end connected to the first door 10 and a second end connected to the second door 20. Here, the connection between the first door 10 and the first end of the connection unit 300 or the connection between the second door 20 and the second end of the connection unit 300 may include an integrally fixed structure or a detachable structure.

In the case in which the first end or the second end of the connection unit 300 is connected to the first door 10 or the second door 20, the first door 10 and the second door 20 may be fastened to each other. The first door 10 and the second door 20 fastened by the connection unit 300 may provide the sidewall structure that closes the open side of the housing 30.

In an embodiment, referring to FIG. 2, the connection unit 300 may include a rotation member 320 and a support member 310. In addition, the rotation member 320 may further include a rotation shaft 321 at an end thereof, and another end thereof without the rotation shaft 321 may be fastened to the first door 10. In an embodiment, an end of the support member 310 may be provided with a seating groove or groove 311 in which the rotation shaft 321 of the rotation member 320 is seated, and another end of the support member 310 without the seating groove 311 may be fastened to the second door 20.

As the rotation member 320 rotates around the rotation shaft 321, the first door 10 fastened to the rotation member 320 may move to open or close an internal space of the housing 30.

In addition, the connection unit 300 may be fastened to the sealing unit 400 described below such that the sealing unit 400 may be arranged between the first door 10 and the second door 20. In an embodiment, a plurality of connection units 300 may be arranged in a longitudinal direction of the sealing unit 400 (i.e., in a y-direction of FIG. 1) to stably arrange the sealing unit 400.

The sealing unit 400 may be fastened to the connection unit 300 and arranged between the first door 10 and the second door 20.

The sealing unit 400 may seal a space between the first door 10 and the second door 20 to prevent or substantially prevent external moisture and foreign substances from flowing into the accommodation space formed by the housing 30. In a case in which the sealing unit 400 is fastened to a side of the first door 10 and the second door 20, when performing an operation of opening and closing the first door 10 and the second door 20, a portion of the sealing unit 400 on another side, which is not fastened, may be curled into the space between the first door 10 and the second door 20. In this case, airtightness of the accommodation space of the energy storage system 1 for the battery modules may be become poor and, thus, performance of protecting the accommodation space from external moisture and foreign substances may be degraded, or a worker may need to individually check and arrange the sealing unit 400, and, thus, the workability may be deteriorated.

The sealing unit 400 of the disclosure may be a structure fastened to the connection unit 300, and even in the case in which an operation of opening and closing the housing 30 is performed, the sealing unit 400 may be prevented or substantially prevented from being curled into the first door 10 and the second door 20. Therefore, the energy storage system 1 having better airtightness and improved management workability may be provided.

In an embodiment, the sealing unit 400 may further include a sealing member 410 arranged between surfaces of the first door 10 and the second door 20 facing each other.

The sealing member 410 may airtightly seal the space between the first door 10 and the second door 20, and, in an embodiment, a length of the sealing member 410 may be arranged to correspond to a height (the y-direction of FIG. 1) of each of the first door 10 and the second door 20.

In an embodiment, the sealing member 410 may include a material that is adhesive and flexible. Material characteristics as described above may secure the high airtightness of the sealing member 410 and absorb a tolerance and gap, which may occur when members are fastened to each other, to facilitate product manufacturing and assembly. For example, the sealing member 410 may include a material such as rubber or silicone. However, the above material of the sealing member 40 is provided as an example and the material is not limited thereto.

In an embodiment, a first end of the sealing member 410 may be arranged between the surfaces of the first door 10 and the second door 20 facing each other, and a second end of the sealing member 410 may be arranged to protrude from surfaces of the first door 10 and the second door 20 that are arranged parallel to each other. In further detail, the first end of the sealing member 410 may be arranged to be closer to the internal space of the housing 30 than the second end of the sealing member 410.

Accordingly, external moisture and foreign substances may be prevented or substantially prevented from flowing into the internal space of the housing 30 through the space formed between the surfaces of the first door 10 and the second door 20 facing each other.

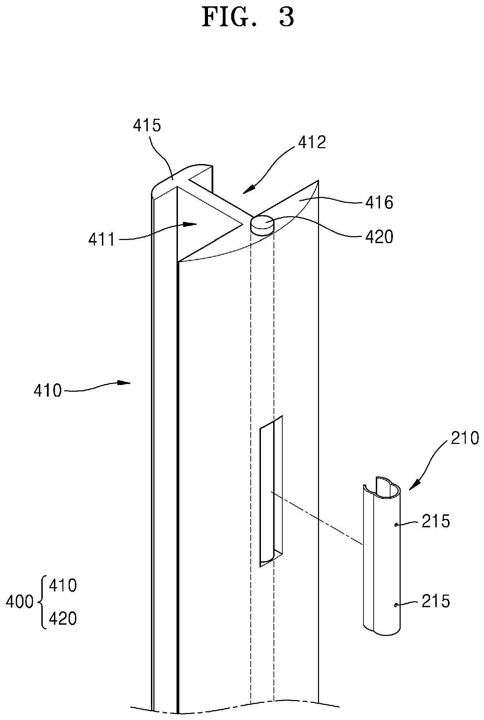

FIG. 3 is a partial perspective view schematically illustrating fastening of the sealing unit 400 and a fixing unit 210 of FIG. 2.

To describe the sealing member 410 in further detail with reference to FIG. 3, in an embodiment, the first end of the sealing member 410 may include a first sealing portion 415 extending toward the first door 10 and the second door 20.

Here, the first sealing portion 415 may be formed to correspond to or to be greater than a separation distance between the first door 10 and the second door 20 in a direction (e.g., in an x-direction of FIG. 2) in which the first door 10 and the second door 20 face each other when arranged adjacent to each other.

In the case in which the first sealing portion 415 is arranged between the surfaces of the first door 10 and the second door 20 facing each other, the space between the first door 10 and the second door 20, which are arranged adjacent to each other, may be blocked. Accordingly, external substances, such as moisture and foreign substances, which may flow into the internal space of the housing 30, may be blocked.

In an embodiment, the first sealing portion 415 may have a shape having a thickness decreasing toward the first door 10 and the second door 20.

Due to the above shape, even in a case in which a width of a protruding shape of the first sealing portion 415 is greater than the separation distance between the first door 10 and the second door 20, an area of the first sealing portion 415 in contact with the first door 10 and the second door 20 may be bent, and, thus, the first sealing portion 415 may be easily arranged in the space between the first door 10 and the second door 20, and, accordingly, assembly may be easily and conveniently made. In addition, as a result, the first sealing portion 415 may be in close contact with the first door 10 and the second door 20 in the space between the first door 10 and the second door 20 to form an airtight structure.

In an embodiment, the second end of the sealing member 410 may include a second sealing portion 416 protruding to overlap the surfaces of the first door 10 and the second door 20 that are arranged in parallel to each other.

In an embodiment, the second sealing portion 416 may protrude to have a width greater than the separation distance between the surfaces of the first door 10 and the second door 20 facing each other when the first door 10 and the second door 20 are arranged adjacent to each other.

External substances, such as moisture and foreign substances that may flow in from the outside, may be effectively blocked by providing a structure blocking, through the second sealing portion 416, the space formed between the first door 10 and the second door 20.

In an embodiment, the second sealing portion 416 may have a shape at least partially overlapping the surfaces of the first door 10 and the second door 20 that are parallel to each other and, accordingly, may provide a hanging structure such that the sealing unit 400 is in close contact with the surfaces of the first door 10 and the second door 20, which are parallel to each other, without being curled into the internal space of the housing 30.

In an embodiment, in the case in which the sealing member 410 includes the first sealing portion 415 and the second sealing portion 416, external substances, including moisture, may be primarily blocked from flowing into the housing 30 by the second sealing portion 416 and secondarily blocked by the first sealing portion 415, and, thus, the airtightness of the energy storage system 1 may be further improved.

In an embodiment, the sealing member 410 may include a first seating groove 411 and a second seating groove 412.

The first seating groove 411 may have a shape corresponding to the first door 10, and the second seating groove 412 may have a shape corresponding to the second door 20. For example, the first seating groove 411 may have a shape corresponding to an edge of the first door 10, and the second seating groove 412 may have a shape corresponding to an edge of the second door 20. The first seating groove 411 and the second seating groove 412 may be arranged between the first sealing portion 415 and the second sealing portion 416.

Accordingly, when the sealing member 410 is arranged between the first door 10 and the second door 20, an adhesive force may be improved to airtightly seal the space between the first door 10 and the second door 20.

In an embodiment, the sealing unit 400 may further include a central member 420, and the energy storage system 1 may further include the fixing unit 210.

The central member 420 may be arranged to be wrapped by the sealing member 410. In an embodiment, the central member 420 may include a material having higher rigidity and strength than the sealing member 410. For example, the central member 420 may include a metal or a synthetic resin-based material, but is not limited thereto.

The central member 420 may be arranged inside the sealing member 410 having low strength and rigidity and thus supplement durability of the sealing unit 400. Due to material characteristics of the sealing member 410, the sealing member 410 may not be directly fastened to the connection unit 300, and even in a case in which the sealing member 410 is fastened to the connection unit 300, durability of a fastening structure may be an issue. However, in an embodiment, a stable structure for fastening the sealing unit 400 to the connection unit 300 may be provided by arranging the central member 420 inside the sealing member 410.

The fixing unit 210 may be arranged between the connection unit 300 and the central member 420. In an embodiment, the fixing unit 210 may have a shape corresponding to the central member 420.

The fixing unit 210 may include a structure for fastening the connection unit 300 and the sealing unit 400. In an embodiment, first, the central member 420 of the sealing unit 400 may be fastened to the fixing unit 210. For example, the central member 420 may be inserted into and fastened to the fixing unit 210. The sealing member 410 may include a partially open area to fasten the central member 420 and the fixing unit 210. In an embodiment, in the case in which the fixing unit 210, to which the central member 420 is fastened, is fastened to the connection unit 300, the sealing unit 400 may be fastened to the connection unit 300. In an embodiment, to fasten the fixing unit 210 to the connection unit 300, the fixing unit 210 may include a fastening groove 215 and may further include a fastening member (not shown).

According to an embodiment, the accommodation space of the housing 30 may be opened and closed to facilitate installation and management of the battery modules within the energy storage system 1, and the energy storage system 1 having improved work efficiency of a worker and product performance may be provided by including the sealing unit 400 that has a high sealing function and is prevented or substantially prevented from being curled into the internal space of the housing 30 by closing and opening operations.

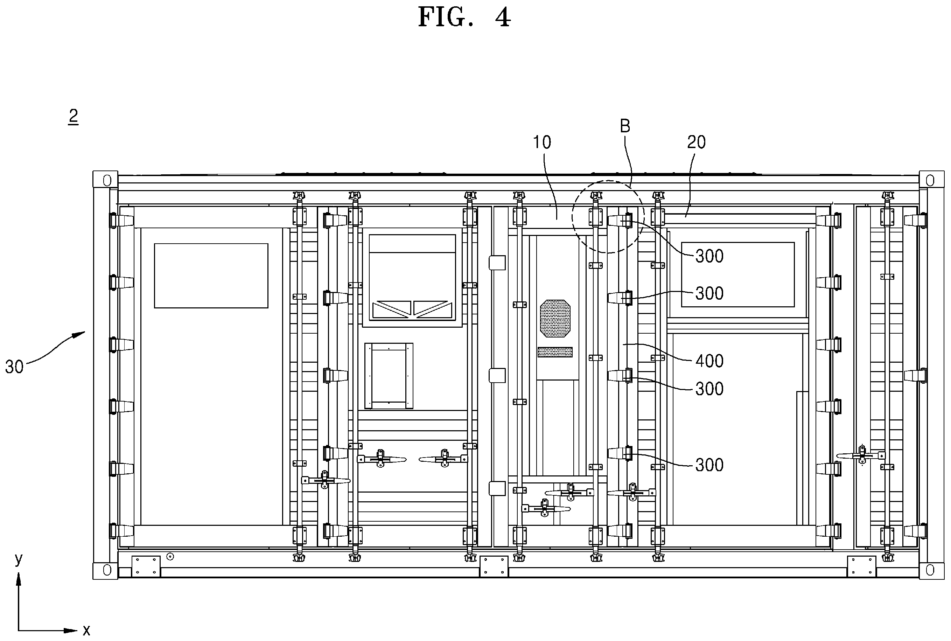

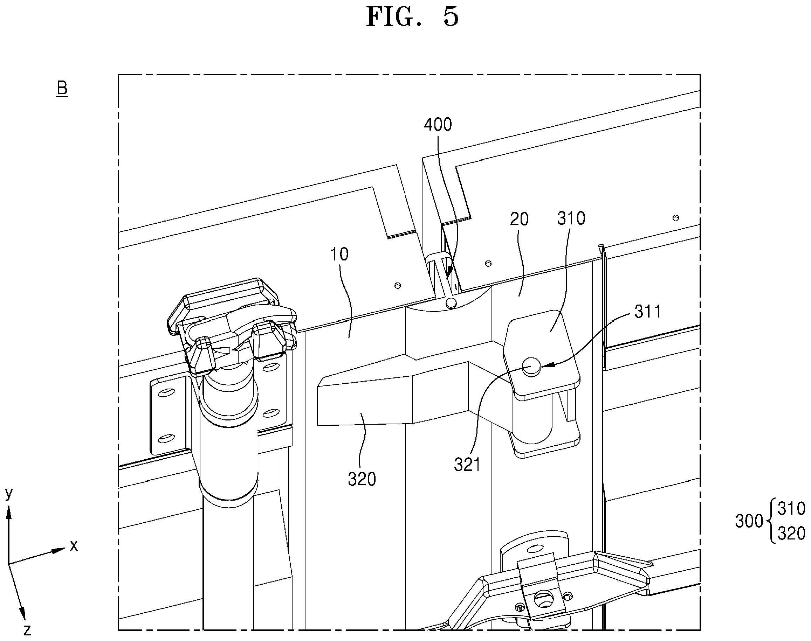

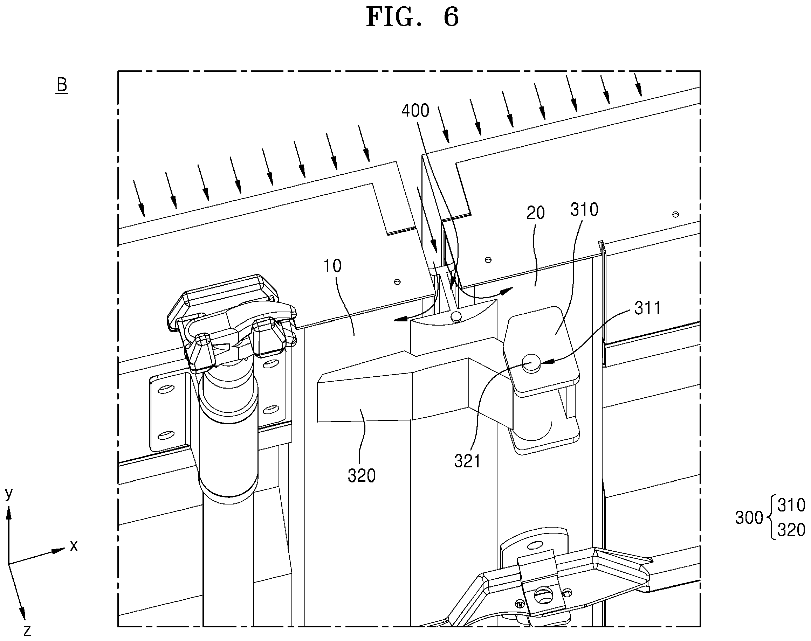

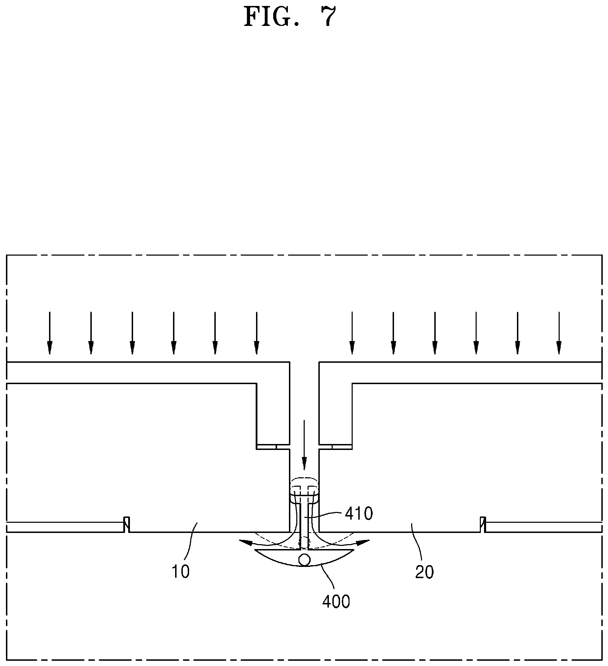

FIG. 4 is a side view schematically illustrating an example of an energy storage system 2 according to an embodiment; FIG. 5 is a partial perspective view schematically illustrating a region "B" of FIG. 4 when in a normal state; and FIG. 6 is a partial perspective view schematically illustrating the region "B" of FIG. 4 if an event occurs. Also, FIG. 7 is a plan view schematically illustrating an example of movement of a sealing member. For convenience of illustration, a housing 30 of FIGS. 5 to 7 is omitted.

Herein, the energy storage system 2 according to an embodiment is described in further detail with reference to the drawings. The same description as the above description may be omitted.

Referring to FIGS. 4 to 6, the energy storage system 2 according to an embodiment may include the housing 30, a first door 10, a second door 20, and a sealing unit 400.

The housing 30 may form an accommodation space accommodating one or more battery modules and may have a shape with at least one side open. For example, the housing 30 may have a generally hexahedral shape with one side open, but is not limited thereto.

In an embodiment, the accommodation space within the housing 30 may include a plurality of battery modules (not shown) mounted on a plurality of battery racks (not shown) and a plurality of battery cells (not shown) accommodated in a case (not shown) of each of the battery modules. Each of the battery cells may include a secondary battery that may be charged and discharged.

The first door 10 and the second door 20 may be arranged adjacent to each other toward the open side of the housing 30. The first door 10 and the second door 20 may provide a structure that may be opened and closed while providing a sidewall structure that blocks the open side of the housing 30 to open the accommodation space of the housing 30 for the battery modules or separate the accommodation space from an external space and thus easily manage the accommodation space.

The sealing unit 400 may be arranged between the first door 10 and the second door 20.

The sealing unit 400 may seal a space between the first door 10 and the second door 20 to prevent or substantially prevent external moisture and foreign substances from flowing into the accommodation space formed by the housing 30.

In an embodiment, referring to FIG. 7, the sealing unit 400 may include a sealing member 410 arranged to move along surfaces of the first door 10 and the second door 20 facing each other.

In an embodiment, the sealing member 410 may have a length corresponding to a height of each of the first door 10 and the second door 20 (the y-direction of FIG. 1) and may be arranged not to be directly fastened to the first door 10 or the second door 20.

In an embodiment, the sealing member 410 may include a material that is adhesive and flexible. Material characteristics as described above may secure high airtightness of the sealing member 410 and absorb a tolerance and a gap, which may occur when members are fastened to each other, to facilitate product manufacturing and assembly. For example, the sealing member 410 may include a material such as rubber or silicone. However, the above material of the sealing member 410 is an example, and the material is not limited thereto.

The sealing member 410 may airtightly seal the space between the first door 10 and the second door 20 to protect the battery modules within the accommodation space of the energy storage system 2 from external moisture and foreign substances.

However, the energy storage system 2, which accommodates a plurality of battery modules, may have a risk of occurrence of events, such as fire and explosion, due to heat generation of the battery modules, and explosive pressure, which is generated in an internal space of the energy storage system 2 if such an event occurs, may not be discharged by the sealing member 410.

Therefore, according to an embodiment, in the case of an event situation, the sealing member 410 of the disclosure may move along the surfaces of the first door 10 and the second door 20 facing each other (e.g., move in a direction indicated by arrows of FIG. 7) to secure a structure through which explosive pressure may be released.

In this case, a separate pressure adjustment apparatus does not need to be installed, and, thus, space efficiency of the energy storage system 2 may be improved, and durability and safety of the energy storage system 2 may be secured. A further detailed description of the movement of the sealing member 410 is described below.

In an embodiment, the energy storage system 2 may further include a connection unit 300, and the sealing unit 400 may be fastened to the connection unit 300.

The connection unit 300 may have a first end connected to the first door 10 and a second end connected to the second door 20. The connection between the first door 10 and the first end of the connection unit 300 or the connection between the second door 20 and the second end of the connection unit 300 may include an integrally fixed structure or a detachable structure.

In the case in which the first end or the second end of the connection unit 300 is connected to the first door 10 or the second door 20, the first door 10 and the second door 20 may be fastened to each other. The first door 10 and the second door 20 fastened by the connection unit 300 may provide the sidewall structure that closes the open side of the housing 30.

In an embodiment, the connection unit 300 may include a rotation member 320 and a support member 310. In an embodiment, the rotation member 320 may include a rotation shaft 321 at an end thereof, and another end thereof without the rotation shaft 321 may be fastened to the first door 10. In an embodiment, the first end of the support member 310 may be provided with a seating groove or hole 311 in which the rotation shaft 321 of the rotation member 320 is seated, and the second end of the support member 310 without the seating groove 311 may be fastened to the second door 20.

As the rotation member 320 rotates around the rotation shaft 321, the first door 10 fastened to the rotation member 320 may move to open or close an internal space of the housing 30.

In an embodiment, the connection unit 300 may be fastened to the sealing unit 400 such that the sealing unit 400 may be arranged between the first door 10 and the second door 20. To stably arrange the sealing unit 400, a plurality of connection units 300 may be arranged in a longitudinal direction of the sealing unit 400 (in the y-direction of FIG. 1).

In a case in which the sealing unit 400 is fastened to a side of the first door 10 and the second door 20, when performing an operation of opening and closing the first door 10 and the second door 20, a portion of the sealing unit 400 on another side, which is not fastened, may be curled into the space between the first door 10 and the second door 20. In this case, airtightness of the accommodation space of the energy storage system 2 for the battery modules may be become poor and thus performance of protecting the accommodation space from external moisture and foreign substances may be degraded, or a worker may need to individually check and arrange the sealing unit 400, and, thus, the workability may be deteriorated.

However, the sealing unit 400 of the present disclosure may be a structure fastened to the connection unit 300, and even in a case in which an operation of opening and closing the housing 30 is performed, the sealing unit 400 may be prevented or substantially prevented from being rolled into the first door 10 and the second door 20. Therefore, the energy storage system 2 having improved airtightness and improved management workability may be provided.

In an embodiment, the first end of the sealing member 410 may be arranged between the surfaces of the first door 10 and the second door 20 facing each other, and the second end of the sealing member 410 may be arranged to protrude from surfaces of the first door 10 and the second door 20 that are arranged parallel to each other. In further detail, the first end of the sealing member 410 may be arranged to be closer to the internal space of the housing 30 than the second end of the sealing member 410.

Accordingly, external moisture and foreign substances may be prevented or substantially prevented from flowing into the internal space of the housing 30 through the space formed between the surfaces of the first door 10 and the second door 20 facing each other.

To describe the sealing member 410 in further detail, in an embodiment, the first end of the sealing member 410 may include a first sealing portion 415 extending toward the first door 10 and the second door 20.

In an embodiment, the first sealing portion 415 may be formed to correspond to or to be greater than a separation distance between the first door 10 and the second door 20 in a direction (e.g., in the x-direction of FIG. 2) in which the first door 10 and the second door 20 face each other when arranged adjacent to each other.

In the case in which the first sealing portion 415 is arranged between the surfaces of the first door 10 and the second door 20 facing each other, the space between the first door 10 and the second door 20, which are arranged adjacent to each other, may be blocked. Accordingly, external substances, such as moisture and foreign substances, which may flow into the internal space of the housing 30, may be blocked.

In an embodiment, the first sealing portion 415 may have a shape with a thickness decreasing toward the first door 10 and the second door 20.

Due to the above shape, even in a case in which a width of a protruding shape of the first sealing portion 415 is greater than the separation distance between the first door 10 and the second door 20, an area of the first sealing portion 415 in contact with the first door 10 and the second door 20 may be bent (refer to FIG. 7), and, thus, the first sealing portion 415 may be easily arranged in the space between the first door 10 and the second door 20, and, accordingly, assembly may be easily and conveniently made. In addition, as a result, the first sealing portion 415 may be in closer contact with the first door 10 and the second door 20 in the space between the first door 10 and the second door 20 to form an airtight structure.

Also, even in the case in which the sealing member 410 moves along the surfaces of the first door 10 and the second door 20 facing each other due to pressure generated in the internal space in an event situation, the area of the first sealing portion 415 in contact with the first door 10 and the second door 20 may be bent (refer to FIG. 7) to secure a space through which the pressure may be released.

In an embodiment, the second end of the sealing member 410 may include a second sealing portion 416 protruding to overlap the surfaces of the first door 10 and the second door 20 that are arranged in parallel to each other.

In an embodiment, the second sealing portion 416 may protrude to have a width greater than the separation distance between the surfaces of the first door 10 and the second door 20 facing each other when the first door 10 and the second door 20 are arranged adjacent to each other.

External substances, such as moisture and foreign substances that may flow in from the outside, may be effectively blocked by providing a structure blocking, through the second sealing portion 416, the space formed between the first door 10 and the second door 20.

In an embodiment, the second sealing portion 416 may have a shape at least partially overlapping the surfaces of the first door 10 and the second door 20 that are parallel to each other and, accordingly, may provide a hanging structure such that the sealing unit 400 is in close contact with the surfaces of the first door 10 and the second door 20, which are parallel to each other, without being curled into the internal space of the housing 30.

In an embodiment, in the case in which the sealing member 410 includes the first sealing portion 415 and the second sealing portion 416, external substances, including moisture, may be primarily blocked from flowing into the housing 30 by the second sealing portion 416 and secondarily blocked by the first sealing portion 415, and, thus, the airtightness of the energy storage system 2 may be further improved.

In an embodiment, the sealing member 410 may include a first seating groove 411 and a second seating groove 412.

In an embodiment, the first seating groove 411 may have a shape corresponding to the first door 10, and the second seating groove 412 may have a shape corresponding to the second door 20. For example, the first seating groove 411 may have a shape corresponding to an edge of the first door 10, and the second seating groove 412 may have a shape corresponding to an edge of the second door 20. Also, the first seating groove 411 and the second seating groove 412 may be arranged between the first sealing portion 415 and the second sealing portion 416.

Accordingly, when the sealing member 410 is arranged between the first door 10 and the second door 20, an adhesive force may be improved to airtightly seal the space between the first door 10 and the second door 20.

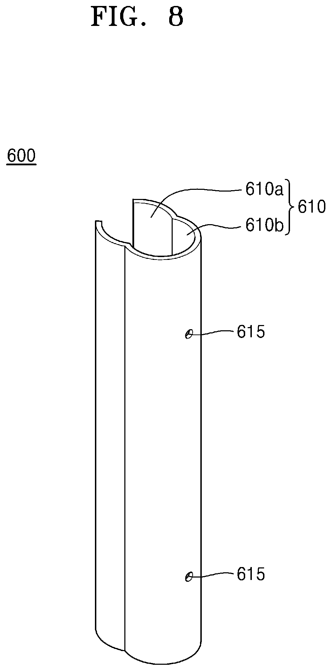

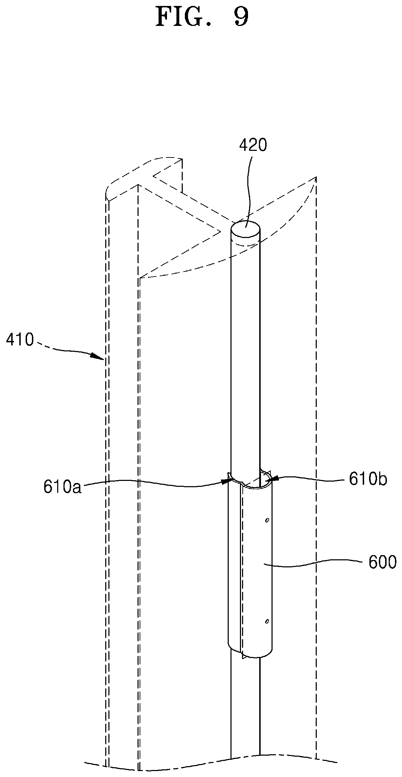

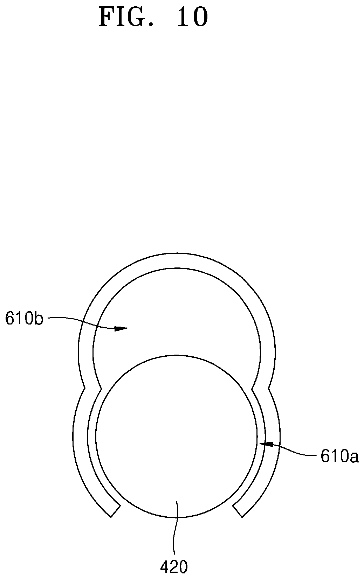

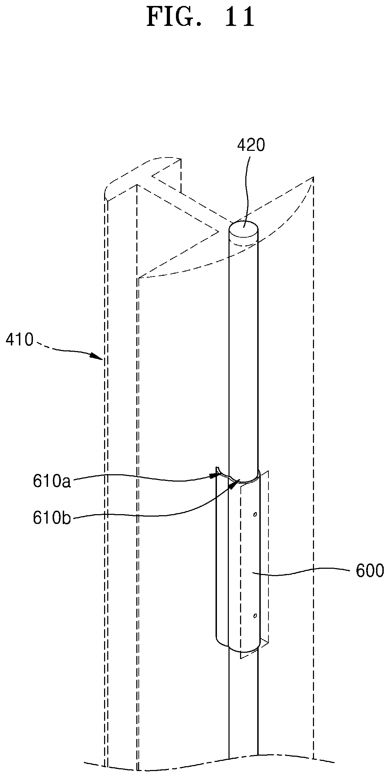

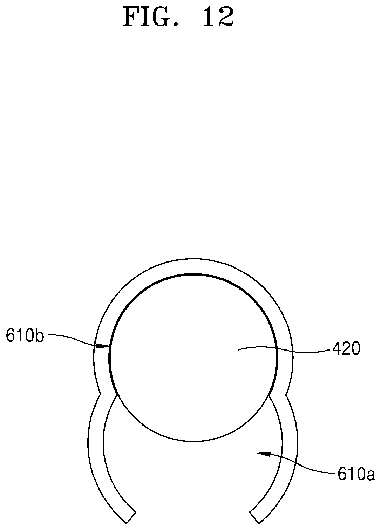

FIG. 8 is a perspective view schematically illustrating an example of a guide unit; FIG. 9 is a partial perspective view schematically illustrating fastening of a guide unit and a central member when in a normal state; FIG. 10 is a cross-sectional view schematically illustrating the guide unit and the central member of FIG. 9; FIG. 11 is a partial perspective view schematically illustrating fastening of a guide unit and a central member if an event occurs; and FIG. 12 is a cross-sectional view schematically illustrating the guide unit and the central member of FIG. 11.

Referring to FIG. 8, in an embodiment, the sealing unit 400 may further include a central member 420 (refer to FIG. 9), and the energy storage system 2 of the disclosure may further include a guide unit 600.

The central member 420 may be arranged to be surrounded by a sealing member 410. In an embodiment, the central member 420 may include a material having higher rigidity and strength than the sealing member 410. For example, the central member 420 may include a metal-based or synthetic resin-based material, but is not limited thereto.

The central member 420 may be arranged inside the sealing member 410 having low strength and rigidity and thus supplement durability of the sealing unit 400. Due to material characteristics of the sealing member 410, the sealing member 410 may not be directly fastened to the connection unit 300, and even in a case in which the sealing member 410 is fastened to the connection unit 300, durability of a fastening structure may be an issue. However, in an embodiment, a stable structure for fastening the sealing unit 400 to the connection unit 300 may be provided by arranging the central member 420 inside the sealing member 410.

The guide unit 600 may be arranged between the connection unit 300 and the central member 420. In an embodiment, the guide unit 600 may include a guide portion 610 having a shape corresponding to the central member 420.

The guide unit 600 may provide a structure for fastening the connection unit 300 and the sealing unit 400. In an embodiment, the central member 420 of the sealing unit 400 may be fastened to the guide portion 610 of the guide unit 600. For example, the central member 420 may be inserted into and fastened to the guide unit 600. Here, the sealing member 410 may include a partially open area to fasten the central member 420 and the guide unit 600. Also, in a case in which the guide unit 600 to which the central member 420 is fastened is fastened to the connection unit 300, the sealing unit 400 may be eventually fastened to the connection unit 300. Here, to fasten the guide unit 600 to the connection unit 300, the guide unit 600 may include a fastening groove 615 and may further include a fastening member (not shown).

As a particular embodiment, the guide portion 610 of the guide unit 600 may include a first guide portion 610a guiding a fastening location of the central member 420 to a first location, and a second guide portion 610b guiding the fastening location of the central member 420 to a second location. Here, the first location may refer to a location closer to the internal space of the energy storage system 2 than the second location.

In an embodiment, the first guide portion 610a and the second guide portion 610b may each have a shape corresponding to the central member 420 and may be arranged to be connected to each other.

Accordingly, a structure in which the central member 420 is seated on each of the first guide portion 610a and the second guide portion 620b may be provided, and the central member 420 may be arranged at the first location or the second location by moving between the first guide portion 610a and the second guide portion 610b.

Referring to FIGS. 9 and 10, when the energy storage system 2 is in a normal state without fire or explosion, the central member 420 may be fastened to the first guide portion 610a of the guide unit 600, and, at this time, as shown in FIG. 5, the sealing unit 400 may be arranged in close contact with the surfaces of the first door 10 and the second door 20 that are parallel to each other. Accordingly, in the normal state, the sealing unit 400 of the energy storage system 2 may maintain high sealing performance.

Referring to FIGS. 11 and 12, if an event situation, such as fire or explosion, occurs in the energy storage system 2, the central member 420 may be fastened to the second guide portion 610b of the guide unit 600, and, at this time, as shown in FIG. 6, the sealing unit 400 may be pushed toward the outside of the energy storage system 2. Therefore, even in a case in which explosive pressure occurs in the internal space of the energy storage system 2 in an event situation, by imparting elasticity and flexibility through structural features by which the sealing unit 400 moves, pressure may be released and shock caused by pressure may be absorbed, and, thus, damage, such as breakage of components, may be prevented or substantially prevented and the energy storage system 2 having improved durability and safety may be provided.

In a case in which the event situation ends, a worker may seat the central member 420 again on the first guide portion 610a to secure airtightness within the accommodation space of the energy storage system 2.

Therefore, the energy storage system 2 according to the disclosure may effectively protect battery modules by providing high sealing performance with respect to an internal space and may improve durability and safety by providing a structure that may flexibly respond to an event, such as fire or explosion.

According to one or more embodiments, performance and manageability of an energy storage system may be improved by providing a structure that may be opened and closed and has improved airtightness.

In addition, stability of the energy storage system may be improved by providing a structure capable of releasing pressure inside the energy storage system even in a case in which an event such as fire and/or explosion occurs.

However, aspects and effects obtained by the present disclosure are not limited to the above-described aspects and effects, and other technical aspects and effects not mentioned may be clearly understood by those skilled in the art from the description of the disclosure.

Although the disclosure has been described above with reference to one or more embodiments illustrated in the drawings, the description is merely provided as an example, and those skilled in the art will understand that various modifications and other equivalent embodiments may be made therefrom. Therefore, the scope of the disclosure should be defined by the appended claims.

## Claims

1. An energy storage system comprising:
a housing comprising an internal space accommodating one or more battery modules, and at least one open side;
a first door and a second door arranged adjacent to each other at the at least one open side of the housing;
a connection unit comprising a first end connected to the first door and a second end connected to the second door; and
a sealing unit fastened to the connection unit and arranged between the first door and the second door.

2. The energy storage system as claimed in claim 1, wherein the connection unit comprises:
a rotation member fastened to the first door and comprising a rotation shaft; and
a support member fastened to the second door and comprising a seating groove or hole in which the rotation shaft is seated.

3. The energy storage system as claimed in claim 1 or 2, wherein the sealing unit comprises a sealing member arranged between surfaces of the first door and the second door facing each other.

4. The energy storage system as claimed in claim 3, wherein a first end of the sealing member is arranged between the surfaces of the first door and the second door facing each other, and a second end of the sealing member is arranged to protrude from surfaces of the first door and the second door that are arranged parallel to each other.

5. The energy storage system as claimed in claim 4, wherein the first end of the sealing member comprises a first sealing portion extending toward the first door and the second door.

6. The energy storage system as claimed in claim 5, wherein the first sealing portion has a shape with a thickness decreasing toward the first door and the second door.

7. The energy storage system as claimed in claim 4, 5 or 6, wherein the second end of the sealing member comprises a second sealing portion protruding to overlap the surfaces of the first door and the second door that are arranged parallel to each other.

8. The energy storage system as claimed in any one of claims 3 to 7, wherein the sealing member comprises a first seating groove having a shape corresponding to the first door and a second seating groove having a shape corresponding to the second door.

9. The energy storage system as claimed in any one of claims 3 to 8, wherein the sealing unit further comprises a central member arranged to be surrounded by the sealing member, and the energy storage system further comprises a fixing unit arranged between the connection unit and the central member and having a shape corresponding to the central member.

10. An energy storage system comprising:
a housing comprising an internal space accommodating one or more battery modules, and at least one open side;
a first door and a second door arranged adjacent to each other at the at least one open side of the housing; and
a sealing unit arranged between the first door and the second door, wherein the sealing unit comprises a sealing member arranged to move along surfaces of the first door and the second door facing each other.

11. The energy storage system as claimed in claim 10, further comprising a connection unit comprising a first end connected to the first door and a second end connected to the second door, wherein the sealing unit is fastened to the connection unit.

12. The energy storage system as claimed in claim 11, wherein the connection unit comprises:
a rotation member fastened to the first door and comprising a rotation shaft; and
a support member fastened to the second door and comprising a seating groove or hole in which the rotation shaft is seated.

13. The energy storage system as claimed in claim 11 or 12, wherein the sealing unit further comprises a central member arranged to be surrounded by the sealing member, and the energy storage system further comprises a guide unit arranged between the connection unit and the central member and having a shape corresponding to the central member.

14. The energy storage system as claimed in claim 13, wherein the guide unit comprises a first guide portion guiding a fastening location of the central member to a first location and a second guide portion guiding the fastening location to a second location.

15. The energy storage system as claimed in claim 14, wherein, when the central member is fastened to the guide unit, a fastening gap between the first guide portion and the central member is greater than a fastening gap between the second guide portion and the central member.
